# EUROPÄISCHE PATENTSCHRIFT

(11) **EP 3 540 254 B1**
(45) Veröffentlichungstag und Bekanntmachung des Hinweises auf die Patenterteilung: **17.11.2021**
(21) Anmeldenummer: 19161082.3
(22) Anmeldetag: 06.03.2019
(51) Int. Cl.: F16C 33/66

(54) **LAGERANORDNUNG**
BEARING ASSEMBLY
SYSTÈME DE PALIER

(30) Priorität: 14.03.2018 DE 102018203917
(43) Veröffentlichungstag der Anmeldung: 18.09.2019
(73) Patentinhaber: Aktiebolaget SKF, 415 50 Göteborg (SE); SKF Lubrication Systems Germany GmbH, 69190 Walldorf (DE)
(72) Erfinder: Engemann, Kai, 50127 Bergheim (DE); Teupner, Martin, 68809 Neulußheim (DE); Tanke, Jesko-Henning, 97422 Schweinfurt (DE)
(74) Vertreter: Kuhstrebe, Jochen

(56) Entgegenhaltungen:
- EP-A1- 2 233 760
- EP-A1- 2 458 164
- WO-A1-2006/099014
- WO-A2-2010/040027
- US-A1- 2003 048 963
- US-A1- 2017 321 753

## Beschreibung

Vorliegende Erfindung betrifft eine Lageranordnung mit einem Innenring und einem Au-ßenring, welche zwischen sich einen Lagerinnenraum bilden, gemäß dem Oberbegriff von Patentanspruch 1.

Lager sind häufig fettgeschmiert. Insbesondere bei Großlagern, wie sie in Windenergieanlagen verwendet werden, die eine lange Betriebsdauer von 20 Jahren und mehr aufweisen und z.B. aus der EP 2 458 164 A1 bekannt sind, muss das verwendete Fett kontinuierlich ausgetauscht werden. Hierzu muss es aus dem Lager entfernt werden. Hierfür wird eine Öffnung benötigt, die jedoch häufig aufgrund der Lagergeometrie nicht so groß ausgeführt werden kann, wie eigentlich erforderlich. Wird das alte Fett nicht aus dem Lager entfernt, tritt entweder das frisch nachgepumpte Fett an seiner Stelle aus oder der Fettaustritt erfolgt unkontrolliert durch die vorhandenen Dichtungen, was zu Schäden am Lager sowie der Umgebung des Lagers und auch zu gefährlichen Arbeitsbedingungen führen kann. Zudem füllt sich das Lager mit zu viel Fett, wodurch unnötig erhöhte Temperaturen erzeugt werden, gefolgt von schlechten Schmierbedingungen und vorzeitiger Fettalterung.

Es ist deshalb Aufgabe vorliegender Erfindung, eine verbesserte Abführung von altem Schmiermittel aus einem Lager zu ermöglichen.

Diese Aufgabe wird durch die Lageranordnung gemäß Patentanspruch 1 gelöst. Die Lageranordnung weist einen feststehenden Innenring und einen rotierenden Außenring, welche zwischen sich einen Lagerinnenraum bilden, auf.

In diesem Lagerinnenraum kann Schmiermittel vorhanden sein, um den Lagerinnenraum, bzw. Wälzkörper, die zwischen dem feststehenden Innenring und dem rotierenden Außenring angeordnet sein können, zu schmieren. Während der Lebensdauer eines Lagers ist üblicherweise ein Austausch des Schmiermittels erforderlich. Um neues Schmiermittel zuführen zu können, muss jedoch das alte, verbrauchte Schmiermittel aus dem Lager entfernt werden.

Hierzu sind gemäß der Erfindung bei feststehendem Innenring an dem Innenring mehrere im Wesentlichen radiale Durchgangsöffnungen vorgesehen. Die Durchgangsöffnungen sind zwischen einer 9 Uhr- und einer 3 Uhr-Position am feststehenden Ring angeordnet.

Während der Bewegung des rotierenden Lageraußenrings wird das Schmiermittel in dem Lagerinnenraum in Richtung der 12 Uhr-Position des Innenrings bewegt. Die Erfinder haben erkannt, dass während der Rotation des Au-ßenrings das Schmiermittel über die 12 Uhr-Position hinausbewegt wird. Daher kann das Schmiermittel über Durchgangsöffnungen ausgeführt werden, die zwischen einer 9 Uhr- und einer 3 Uhr-Position angeordnet sind. Die sich einstellende Verteilung der Schmiermittelkonzentration am Umfang des jeweils stehenden Ringes ist von der Lagergeometrie und der Drehgeschwindigkeit abhängig.

Vorzugsweise ist die Durchgangsöffnung zwischen einer 10 Uhr und einer 2 Uhr Position angeordnet. Da erkannt wurde, dass sich an dieser Position während der Rotation des Au-ßenrings eine vorteilhafte Menge Schmiermittel ansammelt, kann somit besonders vorteilhaft das Schmiermittel durch die dort angeordneten Durchgangsöffnungen befördert werden. Besonders bevorzugt ist eine Position zwischen 1 Uhr und 2 Uhr, da hier aufgrund der Effekte durch die Drehbewegung die benötigte Menge an Schmiermittel austritt.

Die Durchgangsöffnung kann einen Querschnitt von mehr als 110 mm² haben, bevorzugt werden aber Querschnitte über 250 mm², insbesondere mehr als 300 mm², besonders bevorzugt mehr als 350 mm², aufweisen. Die Durchgangsöffnungen sind dabei in ihrer Größe derart ausgestaltet, dass Schmiermittel während des Betriebs nicht einfach herausfließen kann, sondern lediglich verbrauchtes Schmiermittel durch die herrschende Dynamik im Lager in geringen Mengen durch die Durchgangsöffnungen herausgedrückt wird.

Der Durchmesser der Durchgangsöffnung kann über seine Länge hinweg variieren, wobei ein Mindestdurchmesser von 250 mm² bevorzugt ist, um das Ausführen von Schmiermittel sicherzustellen. Der Querschnitt der Durchgangsöffnung kann unterschiedliche Formen aufweisen, beispielsweise kreisförmig, aber auch elliptisch, länglich oder rechteckig sein.

An dem Innenring sind mehrere Durchgangsöffnungen vorgesehen, die jeweils zwischen einer 9 Uhr- und einer 3 Uhr-Position, insbesondere zwischen einer 10 Uhr- und einer 2 Uhr-Position angeordnet sind. Vorzugsweise können die mehreren Durchgangsöffnungen gleichmäßig zwischen der 9 Uhr- und der 3 Uhr-Position, insbesondere zwischen der 10 Uhr- und der 2 Uhr-Position, verteilt sein. Der Durchmesser einer einzelnen Durchgangsöffnung ist in seiner Größe nach oben begrenzt, da sonst das Schmiermittel ungehindert aus dem Lagerinnenraum herausfließen kann. Querschnitte signifikant oberhalb 1300 mm² werden vermieden.

Da mehrere Durchgangsöffnungen vorhanden sind, kann das Abführen von Schmierfett im Vergleich zu einer einzelnen Durchgangsöffnung verbessert werden, da durch die Durchgangsöffnungen in Summe eine größere Austrittsöffnung geschaffen wird.

Gemäß einer weiteren Ausführungsform kann zumindest eine Durchgangsöffnung mit einem Reinigungssystem ausgestattet sein, um die Durchgangsöffhung(en) von Schmierfett reinigen zu können. Auf diese Weise kann ein Stau des Schmiermittels in der einen oder den mehreren Durchgangsöffnungen verhindert werden. Das Reinigungssystem kann beispielsweise eine rotierende Spirale sein, die in der Durchgangsöffnung angeordnet ist, oder ein Reinigungskolben, der entlang der Länge der Durchgangsöffnung gleitet. Das Reinigungssystem kann auch durch eine Luftdüse realisiert werden, die Luft durch die Durchgangsöffnung in das Lager oder aus dem Lager herausbläst. Durch den Luftstrom kann die Durchgangsöffnung von Schmiermittel befreit werden.

Gemäß einer weiteren Ausführungsform kann eine Absaugvorrichtung an mindestens einer der mindestens einen Durchgangsöffnung vorgesehen sein. Die Absaugvorrichtung kann dazu dienen, den Schmiermittelabfluss durch die Durchgangsöffnungen zu unterstützen. Hierzu saugt die Absaugvorrichtung beispielsweise mittels Unterdruck an den Durchgangsöffnungen anliegendes Schmiermittel heraus. Die Absaugvorrichtung kann beispielsweise im Lagerinneren angeordnet sein.

Um das abgeführte Schmiermittel aufzufangen, ist ein Reservoir direkt oder indirekt mit den Durchgangsöffnungen verbunden. Das Reservoir kann an dem Lager selbst abnehmbar angeordnet sein oder kann entfernt dazu vorgesehen sein und mit einem Schlauch oder einer anderen Leitung mit dem Lager verbunden sein. Das Reservoir kann selbst als fester Behälter ausgestaltet sein oder als Schlauch, der beispielsweise flexibel an das Lager angepasst werden kann. Bevorzugt ist das Reservoir unterhalb der Durchgangsöffnung angeordnet, so dass das Schmiermittel in das Reservoir ablaufen kann.

Gemäß der Erfindung ist ein Leitungssystem an den mehreren Durchgangsöffnungen angeordnet, um das Schmiermittel abzuleiten. Das Reservoir ist mit dem Leitungssystem verbunden, in das das verbrauchte Schmiermittel geleitet wird. Das Leitungssystem kann aus einem Schlauch bestehen, der flexibel ist und einfach an das Lager angepasst werden kann. Alternativ kann das Leitungssystem auch aus starren Komponenten bestehen, die an die Durchgangsöffnungen angeschlossen sind. Das Reservoir kann an dem Lager selbst abnehmbar angeordnet sein oder kann entfernt dazu vorgesehen sein und mit einem Schlauch oder einer anderen Leitung mit dem Lager bzw. dem Leitungssystem verbunden sein. Das Reservoir kann abgedichtet mit dem Leitungssystem verbunden sein.

Gemäß einer weiteren Ausführungsform können die Durchgangsöffnungen ein inneres Gewinde aufweisen, in das beispielsweise ein Anschlusselement eingeschraubt werden kann, um das Leitungssystem anschließen zu können.

Zusätzlich zu dem Austausch des Schmierfetts kann auch eine Entlüftung der Lageranordnung erforderlich sein. Da zwischen Start- und Betriebstemperatur eine hohe Temperaturdifferenz besteht, kann, wenn der Lagerinnenraum hermetisch zur Umgebung abgedichtet ist, ein thermisch induzierter Innendruck entstehen, der auf die Dichtlippen des Lagers drücken und erhebliche Probleme erzeugen kann. Beispielsweise kann es dadurch zu einem beschleunigten Dichtlippenverschleiß kommen. Des Weiteren kann eine erhöhte Gefahr von Fettverlust durch Leckage auftreten, wodurch die Lagerreibung erhöht wird. Des Weiteren kann aufgrund des erhöhten Innendrucks die Fettalterung beschleunigt werden, was wiederum zu einer schlechteren Schmierwirkung und einer stärkeren thermischen Verformung des Lagers führt.

Dies wird gemäß der Erfindung verhindert, indem an dem Innenring eine Entlüftungsöffnung vorgesehen ist, die direkt oder indirekt mit der Umgebungsluft verbunden ist. Über die Entlüftungsöffnung kann ein Druckausgleich des Lagerinnenraums mit der Umgebung erfolgen.

Das Leitungssystem kann eine korrespondierende Ventilationsöffnung aufweisen, die mit der Umgebungsluft verbunden ist. Auf diese Weise kann die Entlüftungsöffnung in dem Innenring über das Leitungssystem mittels der Ventilationsöffnung mit der Umgebungsluft in Kontakt sein und einen Druckausgleich durchführen.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine schematische Schnittansicht eines Lagerrings mit einer radialen Öffnung und angeschlossenem Schmiermittelauffangbehälter (nicht Teil der Erfindung);
- Fig. 2:: eine schematische Schnittansicht eines Lagerrings mit mehreren radialen Öffnungen und angeschlossenem Schmiermittelauffangbehälter; und
- Fig. 3:: eine schematische Schnittansicht eines Lagerrings mit mehreren radialen Öffnungen.

Im Folgenden werden gleiche oder funktionell gleichwirkende Elemente mit denselben Bezugszeichen gekennzeichnet.

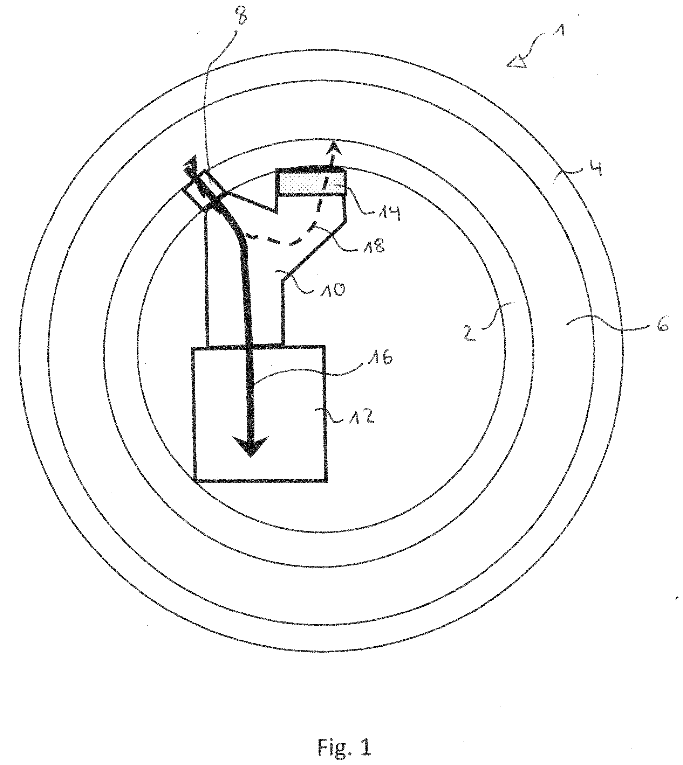

Fig. 1 zeigt ein Lager 1 mit einem feststehenden Innenring 2 und einem rotierenden Au-ßenring 4, die zwischen sich einen Lagerinnenraum 6 definieren, in dem Wälzkörper (nicht gezeigt) angeordnet sein können. Als nicht gezeigte Alternative kann der Außenring 4 feststehen und der Innenring 2 rotieren. Die Ausführungen zu dem feststehenden Innenring 2 gelten daher gleichfalls für einen feststehenden Außenring 4.

In dem Lagerinnenraum 6 befindet sich üblicherweise Schmiermittel, um die Schmierung des Lagers 1, insbesondere von Wälzkörpern, sicherzustellen. Während der Lebensdauer des Lagers 1 muss das Schmiermittel ausgetauscht werden. Um neues Schmiermittel in das Lager 1 einbringen zu können, muss zunächst das alte Schmiermittel aus dem Lager entfernt werden.

Hierzu ist in dem Innenring 2 eine Durchgangsöffnung 8 vorgesehen. Die Durchgangsöffnung 8 befindet sich zwischen einer 9 Uhr- und einer 3 Uhr-Position an dem Innenring 2. An diesen Bereich wird während einer Rotation des Außenrings 4 altes Schmiermittel befördert und liegt dort an dem Innenring 2 und somit an der Durchgangsöffnung 8 auf. Durch die Rotation, die Gravitationskraft sowie die weitere Dynamik im Lager 1 wird das Schmiermittel dann durch die Durchgangsöffnung 8 gedrückt, bzw. fließt durch diese ab, wie durch den Pfeil 16 angegeben ist.

Zwischen der Durchgangsöffnung 8 und dem Leitungssystem 10 kann eine Absaugvorrichtung vorgesehen werden. Eine solche Absaugvorrichtung kann durch Unterdruck das Abfließen des Schmiermittels durch die Durchgangsöffnung 8 unterstützen.

Die Durchgangsöffnung 8 kann eine im Wesentlichen radiale Durchgangsöffnung sein, die einen Durchmesser von mehr als 110 mm² aufweist. Durch diesen Durchmesser kann sichergestellt werden, dass das Schmiermittel alleine aufgrund der Dynamik im Lager 1 durch die Durchgangsöffnung 8 aus dem Lagerinnenraum 6 befördert wird.

Die Durchgangsöffnung 8 kann mit einem Reservoir 12 verbunden werden, in dem das Schmiermittel gesammelt werden. Das Reservoir 12 kann zum Auffangen von verbrauchtem Schmiermittel verwendet werden und kann innerhalb des Lagers 1, wie in Fig. 1 gezeigt, aber auch außerhalb des Lagers 1 angeordnet sein. Ist das Reservoir 12 voll, kann es ausgetauscht werden.

Wie in Fig. 1 gezeigt, kann die Durchgangsöffnung 8 auch mit einem Leitungssystem 10 verbunden sein. Das Leitungssystem 10 kann aus einem Schlauch oder einem ähnlichen flexiblen Element oder aus starren Komponenten bestehen. Über das Leitungssystem 10 kann das Schmiermittel von der Durchgangsöffnung 8 direkt in das Reservoir 12 befördert werden. Im letzteren Fall kann das Reservoir 12 über eine Leitung mit dem Leitungssystems 10 verbunden sein.

Da zwischen Start- und Betriebstemperatur des Lagers 1 eine hohe Temperaturdifferenz besteht, kann, wenn der Lagerinnenraum 6 hermetisch zur Umgebung abgedichtet ist, ein thermisch induzierter Innendruck entstehen, der auf die Dichtlippen des Lagers 1 drücken und erhebliche Probleme erzeugen kann. Um dies zu vermeiden, ist in dem Leitungssystem 10 eine Ventilationsöffnung 14 vorgesehen sein, die zum Druckausgleich mit der Umgebung dient. Der Luftstrom ist durch den Pfeil 18 angegeben. Die Ventilationsöffnung 14 kann einen Filter aufweisen, um Feuchtigkeit aus dem Lager 1 herauszuhalten. Die Ventilationsöffnung 14 kann getrennt von und bevorzugt über der Durchgangsöffnung 8 in dem Innenring 2 angeordnet sein. Durch diese Anordnung kann die Luft besonders gut aus dem Lager 1 über die Ventilationsöffnung 14 entweichen. Die Durchgangsöffnung 8 dient in diesem Fall gleichzeitig als Entlüftungsöffnung für das Lager 1. Durch die Durchgangsöffnung 8 und die Ventilationsöffnung 14 kann somit der Druckausgleich zwischen dem Lager 1 und der Umgebungsluft erfolgen.

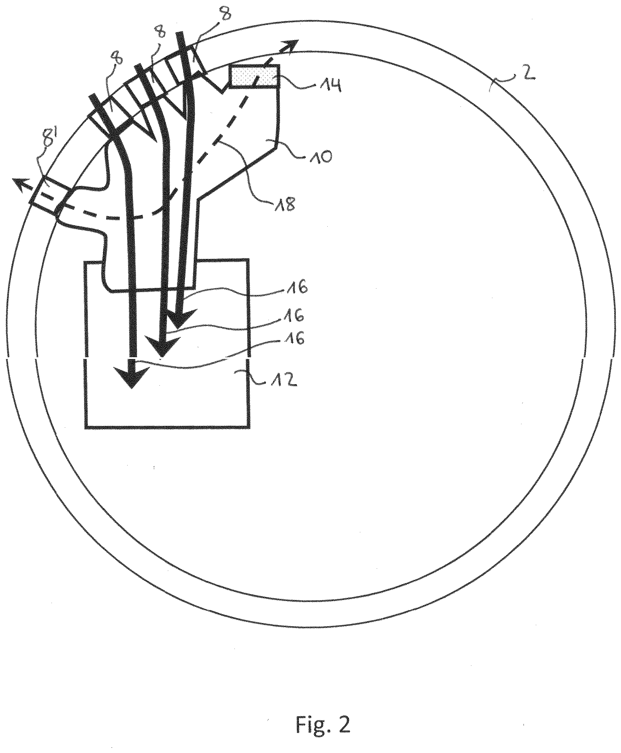

In einer Ausführungsform der Erfindung, die in Fig. 2 gezeigt ist, sind mehrere Durchgangsöffnungen 8, 8' in dem Innenring 2 vorgesehen. Wie gezeigt, sind alle Durchgangsöffnungen 8, 8' mit dem Leitungssystem 10 verbunden, um darüber Schmiermittel abzuführen. Beispielsweise können vier bis sechs dieser Durchgangsöffnungen 8, 8' vorgesehen sein, die zwischen einer 9 Uhr-Position und einer 3 Uhr-Position angeordnet sind. In Fig. 2 sind die Durchgangsöffnungen 8, 8' um eine 11 Uhr-Position angeordnet, besonders bevorzugt ist jedoch eine Position zwischen 1 Uhr und 2 Uhr. In diesem Bereich befindet sich aufgrund der Bewegung des Schmiermittels im Lager 1 das verbrauchte Schmiermittel, welches aufgrund der Dynamik des Lagers 1 durch die Durchgangsöffnungen 8 herausgedrückt werden kann.

Zwischen den Durchgangsöffnungen 8 und dem Leitungssystem 10 kann, wie auch in Fig. 1, eine Absaugvorrichtung vorgesehen werden, die durch Unterdruck das Abfließen des Schmiermittels durch die Durchgangsöffnungen 8 unterstützt.

In der in Fig. 2 gezeigten Ausführungsform kann eine der Durchgangsöffnungen 8' als Entlüftungsöffnung verwendet werden. Durch die Entlüftungsöffnung 8' und die Ventilationsöffnung 14 kann ein Druckausgleich zwischen der Umgebung und dem Lagerinnenraum 3 erfolgen. Die Entlüftungsöffnung 8' kann an einer Position etwas über 9 Uhr angeordnet sein., da sich an dieser Position weniger Schmiermittel befindet.

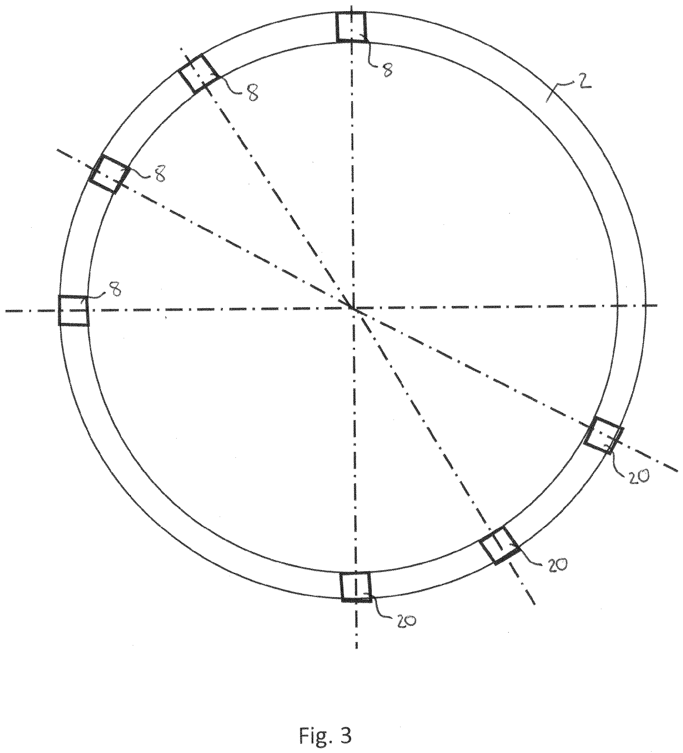

Wie bereits erläutert, wird während der Lebensdauer des Lagers 1 sowohl Schmiermittel aus dem Lager 1 abgeführt als auch frisches Schmiermittel in das Lager 1 eingeführt. Hierzu können weiterhin Einführöffnungen 20 im jeweils stehenden Ring sein, bei rotierendem Außenring also im Innenring 2. Wie in Fig. 3 gezeigt ist, können diese Einführöffnungen 20 den Durchgangsöffnungen 8 zum Abführen des Schmiermittels radial gegenüberliegen. Obwohl drei Einführöffnungen 20 gezeigt sind, können auch mehr oder weniger Einführöffnungen 20 vorgesehen sein. Die Einführöffnungen 20 sind an einer Position angeordnet, von der aus neues Schmiermittel während der Rotation des Lagers gut verteilt wird, ohne direkt wieder durch die Durchgangsöffnungen 8 aus dem Lager 1 befördert zu werden. Durch die gewählte Position in Drehrichtung kurz hinter den Durchgangsöffnungen 8 wird erreicht, dass sich das frisch eingebrachte Schmiermittel optimal mit dem bereits vorhandenen Schmiermittel vermischt, bevor es durch die Drehbewegung des Lagers 1 in die Nähe der Durchgangsöffnungen 8 gelangt. Damit wird der Austritt frischen Schmiermittels aus der Durchgangsöffnung 8 minimiert.

Wie in Fig. 3 des Weiteren gezeigt ist, sind die Durchgangsöffnungen 8 und die Einführöffnungen 20 gleichmäßig beabstandet. Dies ist vorteilhaft, da so eine gleichmäßige Abführung und Einführung von Schmiermittel erreicht werden kann.

Durch die vorgeschlagene Lageranordnung kann auf einfache Weise verbrauchtes Schmiermittel aus dem Lager abgeführt werden. Hierdurch kann die Schmierung in dem Lager verbessert werden, da sich altes, verbrauchtes Schmiermittel nicht ansammeln kann.

### Bezugszeichenliste

- 1: Lager
- 2: Innenring
- 4: Außenring
- 6: Lagerinnenraum
- 8, 8': Durchgangsöffnung
- 10: Leitungssystem
- 12: Reservoir
- 14: Ventilationsöffnung
- 16: Schmiermittelfluss
- 18: Luftstrom
- 20: Einführöffnungen

## Patentansprüche

1. Lageranordnung (1) mit einem Innenring (2) und einem Außenring (4), welche zwischen sich einen Lagerinnenraum (6) bilden, wobei bei stehendem Innenring an dem Innenring (2) mehrere im Wesentlichen radiale Durchgangsöffnungen (8) vorgesehen sind, wobei die Durchgangsöffnungen (8) zwischen einer 9 Uhr- und einer 3 Uhr-Position angeordnet sind, wobei die Durchgangsöffnungen als Schmiermittelausgänge ausgebildet sind, um Schmiermittel aus dem Lagerinnenraum (6) zu entfernen, wobei ein Leitungssystem (10) an den mehreren Durchgangsöffnungen (8) angeordnet ist, wobei vorzugsweise das Leitungssystem (10) eine Ventilationsöffnung (14) aufweist, die mit der Umgebungsluft verbunden ist, und wobei die mehreren Durchgangsöffnungen (8) über das Leitungssystem mit einem Reservoir (12) verbunden sind, **dadurch gekennzeichnet, dass** das Reservoir (12) im Inneren der Lageranordnung (1) angeordnet ist.

2. Lageranordnung (1) nach Anspruch 1, wobei die Durchgangsöffnungen (8) zwischen einer 10 Uhr und einer 2 Uhr Position angeordnet sind.

3. Lageranordnung (1) nach einem der vorhergehenden Ansprüche, wobei die Durchgangsöffnungen (8) einen Durchmesser von größer als 250 mm², bevorzugt größer als 300 mm², insbesondere größer als 350 mm² aufweisen.

4. Lageranordnung (1) nach einem der vorhergehenden Ansprüche, wobei die mehreren Durchgangsöffnungen (8) gleichmäßig zwischen der 9 Uhr- und der 3 Uhr-Position, insbesondere zwischen der 10 Uhr- und der 2 Uhr-Position, verteilt sind.

5. Lageranordnung (1) nach einem der vorhergehenden Ansprüche, wobei zumindest eine Durchgangsöffnung (8) mit einem Reinigungssystem ausgestattet ist.

6. Lageranordnung (1) nach einem der vorhergehenden Ansprüche, wobei eine Absaugvorrichtung an mindestens einer der mehreren Durchgangsöffnungen (8) angeordnet ist.

7. Lageranordnung (1) nach einem der vorhergehenden Ansprüche, wobei der Lagerinnenraum (6) mit einem Schmiermittel, insbesondere Schmierfett, geschmiert ist.

## Claims

1. Bearing assembly (1) having an inner race (2) and an outer race (4) which therebetween form a bearing interior (6), wherein in a stationary inner race a plurality of substantially radial through openings (8) are provided on the inner race (2), wherein the through openings (8) are disposed between a nine o'clock position and a three o'clock position, wherein the through openings are configured as lubricant outlets for removing lubricant from the bearing interior (6), wherein a line system (10) is disposed on the plurality of through openings (8), wherein the line system (10) preferably has a ventilation opening (14) which is connected to the ambient air, and wherein the plurality of through openings (8) by way of the line system are connected to a reservoir (12),
**characterized in that**
the reservoir (12) is disposed inside the bearing assembly (1).

2. Bearing assembly (1) according to Claim 1, wherein the through openings (8) are disposed between a ten o'clock position and a two o'clock position.

3. Bearing assembly (1) according to one of the preceding claims, wherein the through openings (8) have a diameter of more than 250 mm², preferably more than 300 mm², in particular more than 350 mm².

4. Bearing assembly (1) according to one of the preceding claims, wherein the plurality of through openings (8) are distributed uniformly between the nine o'clock position and the three o'clock position, in particular between the ten o'clock position and the two o'clock position.

5. Bearing assembly (1) according to one of the preceding claims, wherein at least one through opening (8) is provided with a cleaning system.

6. Bearing assembly (1) according to one of the preceding claims, wherein a suction device is disposed on at least one of the plurality of through openings (8).

7. Bearing assembly (1) according to one of the preceding claims, wherein the bearing interior (6) is lubricated with a lubricant, in particular lubricating grease.

## Revendications

1. Ensemble de palier (1), comprenant une bague intérieure (2) et une bague extérieure (4) qui forment ensemble un espace intérieur de palier (6),
dans lequel, lorsque la bague intérieure (2) est stationnaire, plusieurs ouvertures de passage (8) substantiellement radiales sont prévues, les ouvertures de passage (8) étant disposées entre une position de 9 heures et une position de 3 heures, les ouvertures de passage étant réalisées sous forme de sorties de lubrifiant pour retirer du lubrifiant de l'espace intérieur de palier (6), un système de conduites (10) étant disposé au niveau des plusieurs ouvertures de passage (8), le système de conduites (10) présentant de préférence une ouverture de ventilation (14) qui est reliée à l'air ambiant, et les plusieurs ouvertures de passage (8) étant reliées à un réservoir (12) par l'intermédiaire du système de conduites,
**caractérisé en ce que** le réservoir (12) est disposé à l'intérieur de l'ensemble de palier (1).

2. Ensemble de palier (1) selon la revendication 1, dans lequel les ouvertures de passage (8) sont disposées entre une position de 10 heures et une position de 2 heures.

3. Ensemble de palier (1) selon l'une quelconque des revendications précédentes, dans lequel les ouvertures de passage (8) présentent un diamètre supérieur à 250 mm², de préférence supérieur à 300 mm², en particulier supérieur à 350 mm².

4. Ensemble de palier (1) selon l'une quelconque des revendications précédentes, dans lequel les plusieurs ouvertures de passage (8) sont réparties régulièrement entre la position de 9 heures et la position de 3 heures, en particulier entre la position de 10 heures et la position de 2 heures.

5. Ensemble de palier (1) selon l'une quelconque des revendications précédentes, dans lequel au moins une ouverture de passage (8) est équipée d'un système de nettoyage.

6. Ensemble de palier (1) selon l'une quelconque des revendications précédentes, dans lequel un dispositif d'aspiration est disposé sur au moins l'une des plusieurs ouvertures de passage (8).

7. Ensemble de palier (1) selon l'une quelconque des revendications précédentes, dans lequel l'espace intérieur de palier (6) est lubrifié par un lubrifiant, en particulier une graisse de lubrification.
